# EUROPÄISCHE PATENTSCHRIFT

(11) **EP 0 613 934 B1**
(45) Veröffentlichungstag und Bekanntmachung des Hinweises auf die Patenterteilung: **03.09.1997**
(21) Anmeldenummer: 94101261.9
(22) Anmeldetag: 28.01.1994
(51) Int. Cl.: C09J 7/02

(54) **Abdeckband für Lackierarbeiten im Bereich von Dichtelementen für Fenstereinfassungen und Karosseriebauteilen an Kraftfahrzeugen oder dergleichen**
Masking tape for painting near gaskets of windows and coachwork parts on cars, etc.
Ruban de couverture pour peindre de près des joints de fenêtres et despièces de carrosserie automobile etc.

(30) Priorität: 27.02.1993 DE 9302930 U
(43) Veröffentlichungstag der Anmeldung: 07.09.1994
(73) Patentinhaber: Bellof, Georg, D-36103 Flieden (DE)
(72) Erfinder: Bellof, Georg, D-36103 Flieden (DE)
(74) Vertreter: Meier, Friedrich, Dipl.-Ing.

(56) Entgegenhaltungen:
- WO-A-94/10255
- DE-U- 8 607 368
- DE-U- 9 106 206
- FR-A- 2 116 964

## Beschreibung

Die Erfindung bezieht sich auf ein Abdeckband aus Papier oder Folie, insbes. für Lackierarbeiten im Bereich von Dichtlippen an Kraftfahrzeugen, das zumindest einseitig mit einer klebstoffartigen Haftschicht versehen ist, nachstehend Klebeband genannt.

Insbesondere bei Reparaturarbeiten an den lackierten Karosserieteilen von Kraftfahrzeugen, aber auch bei anderen Lackierarbeiten werden zur Randbegrenzung der zu lackierenden Flächen und zur Abdeckung von Glasscheiben und dergleichen, Abdeck - Klebebänder verwendet, die für sich allein, oder in Verbindung mit Abdeckpapier eingesetzt werden. Hierbei muß sehr darauf geachtet werden, daß am fertigen Produkt, nach dem Aufspritzen des Lackes, an den zu reparierenden Lackflächen keine sichtbaren Lackränder vorhanden sind. Bei flächigen Teilen kann ein Spritzrand durch einspritzen vermieden werden. Auch bei Randbegrenzungen, die unter Deckleisten liegen, ist der Spritzrand kein Problem. Leicht entfernbare Teile, wie Scheinwerfer oder Rückleuchten werden vor der Lackierung ausgebaut, so daß auch hier bis in die von den Teilen abgedeckten Kanten lackiert werden kann.

Schwierigkeiten bereitet eine Reparaturlackierung gerade bei modernen Fahrzeugen immer dann, wenn Teile, wie z.B. Scheiben eingeklebt sind, oder die Dichtelemente aus anderen Gründen nur schwer auszubauen sind. Auch hier muß die Lackierung so erfolgen, daß der Lack bis unter die Dichtelemente, z.B. Dichtlippen gelangt. Hierfür ist es bekannt, die Lippen der Dichtelemente mit Hilfe eingedrückter, schnurartiger Schaumstoffwülste aufzuspreizen. Diese Hilfsmittel sind aufwendig und nur schwer handhabbar.

Ferner ist es nach DE -U- 91 06 206 bekannt, ein Abklebeprofil aus zwei zueinander im Winkel stehenden Profilschenkeln (L - förmiges Profil) mit einer Klebebeschichtung auf wenigstens einer Profilaussenseite einzusetzen. Einer der Profilschenkel wird zwischen das Fahrzeugteil und die Dichtlippen eingeschoben und dann die Dichtlippe von der Karosserie abgehoben. In dieser Stellung wird dann der andere Schenkel des Abklebeprofils mit der Fahrzeugscheibe oder anderen Teilen der Karosserie so verklebt, daß sich für die Lackierarbeiten ein offener Spalt ergibt. Ein derartiges Profil ist zwar besser, als die vorstehend erwähnten, schnurartigen Schaumstoffwülste, die Profile sind aber nur schwer an Biegungen anzupassen und die Profile müssen starkwandig sein, um die zum Abheben der Dichtlippe notwendige Kraft mit dem abgewinkelten Teilstück zu übertragen. Ein Anpassen der mit einer Haftschicht versehenen Schenkel an die gegebenen Konturen eines Fahrzeuges z.B. in Biegungen und an gekrümmten Kanten, ist im Gegensatz zu papierartigen Klebebändern sehr aufwendig und schwierig.

In den Anmeldungsunterlagen der älteren Patentanmeldung W 94/ 10255, entsprechend der DE- Al - 42 36 948, ist ein aus der vorveröffentlichten DE-U- 91 08 208 bekanntes Verfahren beschrieben, bei dem ein nicht abgewinkeltes, also flaches, auf der gesamten Breite in sich steifes Klebeband eingesetzt ist. Ein derartiges Band hat, wie das vorstehend erläuterte Band, den für die Praxis wesentlichen Nachteil, daß es in Biegungen auch unter Benutzung von Einschnitten, nur sehr bedingt eingesetzt werden kann.

Die FR-A-2116964 zeigt und beschreibt ein Klebeband zum Befestigen von Abdeckpapier an den Dichtlippen der Scheibe eines Kraftfahrzeuges. Das Klebeband hat einen klebstofffreien Rand. Das Klebeband ist derart auf der Dichtlippe der Scheibe befestigt, daß das klebstofffreie Randteil absteht und so beim Lackieren hinterspritzt werden kann. Für das Abheben von Dichtlippen ist dieses Band nicht geeignet.

Der Erfindung liegt die Aufgabe zugrunde, ein Hilfsmittel zu schaffen, das bei der Bearbeitung von Randbegrenzungen mit übergreifenden Dichtlippen eingesetzt werden kann, das leicht anzubringen ist und darüber hinaus auch ein Lackieren von abgedeckten Kanten ermöglicht. Ferner soll das Abdeckband in einfachen Wickeln lieferbar sein und sich im Klebebereich den Konturen des Fahrzeuges oder seiner Teile, leicht anpassen lassen.

Gemäß der Erfindung wird die gestellte Aufgabe dadurch gelöst, daß bei einem Abdeckband zumindest eine seiner Kanten mit einem bandförmigen klebstofffreien, flexiblen Versteifungselement versehen ist, dessen Knicksteifigkeit vielfach größer gewählt ist, als die des Klebebandes.

Das klebstofffreie Versteifungselement ermöglicht das Einschieben des Abdeckbandes unter die Dichtlippen und damit dann auch das Aufbiegen der Dichtlippen, so daß die von den Dichtlippen abgedeckten Kanten für eine Lackierung frei werden.

Das band - bzw. streifenförmige Versteifungselement ist längs einer der Kanten eines an sich handelsüblichen Abdeck - Klebebandes mit diesem fest verbunden. Vorteilhaft ist es, diese Verbindung unlösbar, durch Kleben oder Schweißen zu machen.

Wegen der häufig doch recht fest anliegenden Dichtlippen muß zum Einschieben des Abdeckbandes zwischen Lackierfläche und Dichtlippe Kraft aufgewendet werden. Dies erfordert, daß die Knickfestigkeit des Versteifungselementes, also des Streifens wesentlich höher gewählt werden muß, als die Steifigkeit bzw. Knickfestigkeit des Klebebandes.

Für besondere Anwendungsfälle kann es bei Streifen mit größerer Dicke zweckmäßig sein, den Streifen mit einem messerförmigen Querschnitt, also mit einer Schneide auszustatten, der das Einschieben unter sehr dicke Dichtlippen erleichtert.

Anhand der Zeichnung werden Ausführungsbeispiele der Erfindung erklärt und die Einsatzmöglichkeiten des Abdeckbandes erläutert.

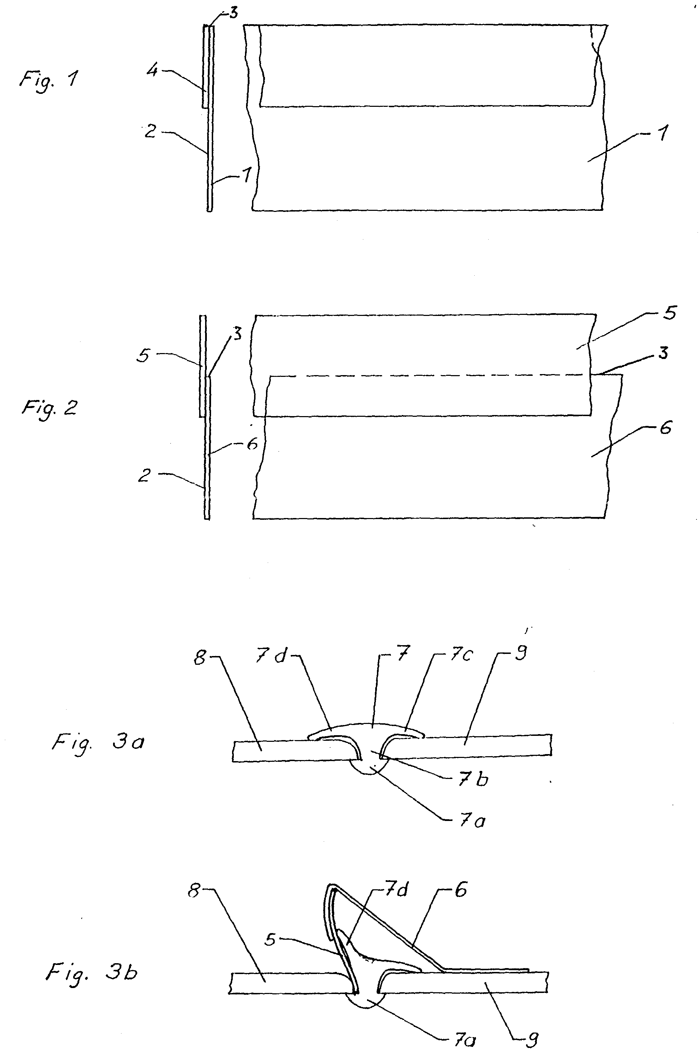

Die Fig. 1 zeigt im Querschnitt und im Aufriß ein handelsübliches Abdeck - Klebeband 1, das auf der einen Seite eine Haftschicht 2 aufgetragen hat. Längs einer Kante 3, ist auf das Band 1 ein streifenförmiges Versteifungselement 4 aufgebracht. Derartige Klebebänder haben eine Breite zwischen 20 mm und 80 mm, bei einer Dicke von etwa 125 µ Hier sind selbstverständlich Abweichungen zur Anpassung an die vorliegenden Gegebenheiten möglich. Das Versteifungselement in Form eines aufgeklebten oder mit einer Kunststoffschicht verschweißten Streifens 4 kann eine dem Band 1 angepaßte Stärke haben. Stärken unter 80 µ haben bei Einsatz von Kunststoffstreifen, z.. B. aus Polyester nur in Ausnahmefällen eine ausreichende Steifigkeit. Die gesamte Banddicke beträgt in der Praxis zwischen 0,200 und 0,300 mm.

Die Fig. 2 zeigt im Schnitt und im Aufriß eine Ausführungsform bei der das streifenförmige Verstärkungselement 5 mit dem Klebeband 6 so verbunden ist, daß der Streifen 5 seitlich über das Klebeband 6 übersteht. Diese Ausführungsform hat den Vorteii, daß durch die verminderte Kantenstärke und die glatte Oberfläche, der Streifen 5 leichter unter eine Dichtlippe eingeschoben werden kann.

Die Fig. 3a und 3b zeigen in schematischer Darstellung ein Dichtungselement 7 das einen Spalt zwischen zwei lackierten Teilen 8 und 9 abdeckt. Das Dichtungselement 7 besteht aus einem selbsthaltend eingesprengten Fußteil 7a, dem stegartigen Verbindungsteil 7b und den beiden Dichtlippen 7c und 7d. Es sei angenommen, daß das Karosserieteil 8 lackiert werden muß. Hierzu wird unter die Lippe 7d der Streifen 5 eingeschoben. Dann wird die Lippe 7d, wie aus Fig. 3b ersichtlich, aufgebogen und das Klebeband 6 mit Hilfe der Haftschicht, auf dem Karosserieteil 9 in der ersichtlichen Lage fixiert. Damit ist es möglich, nicht nur die von der Dichtlippe 7d abgedeckte Fläche, sondern auch die eingezogene Kante des Teiles 8 zu lackieren.

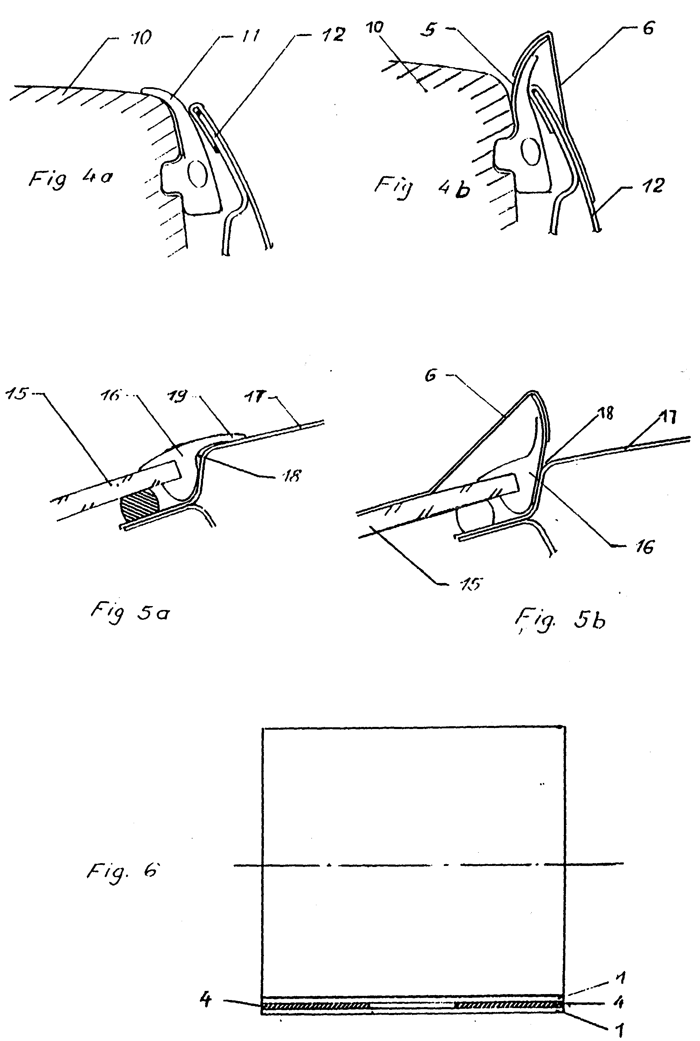

Die Fig. 4a und 4b zeigen in schematischer Darstellung ein Karosserieteil 10 an das unter Zwischenlage einer Dichtung 11 ein Türrahmen 12 anliegt. Auch hier ist nach Fig. 4b der knicksteife Streifen 5 unter die Lippe der Dichtung 11 eingeschoben, dann ist die Dichtung 11 so weit aufgebogen, daß die Kante des Karosserieteiles 10 frei geworden ist. In dieser Lage ist dann die Dichtung 11 durch den Klebstreifen 6 fixiert. Hier wird besonders deutlich, wie mit dem Abdeckband nach der Erfindung, die zu lackierenden Randbereiche - für den Sprühstrahl aus der Spritzpistole - freigehalten werden können.

Die Fig. 5a und 5b zeigen in schematischer Darstellung eine Glasscheibe 15, die mit Hilfe eines elastischen Trägers 16 in den Rahmen 17 der Karosserie eingeklebt ist. Das Herausnehmen einer solchen Scheibe, damit der Rahmen 17 auch im Kantenbereich 18 lackiert werden kann, würde einen erheblichen Aufwand an Arbeitszeit und Material verursachen. Hier kann mit einem Abdeckband nach der Erfindung die Kante 18 durch das Einschieben des Streifens 5 unter die Lippe 19, nicht nur die Kante 18, sondern auch die Fuge freigelegt werden. Der Klebstreifen 5 ist dabei in der aus Fig. 5b ersichtlichen Lage, auf der Scheibe 15 fixiert.

Die Fig. 6 zeigt in schematischer Darstellung einen Wickel eines Abdeckbandes nach der Erfindung, bei dem zwei Bänder kantenverkehrt aufeinandergelegt und so gewickelt sind. Dies hat den Vorteil, daß die Haftschichten der Bänder wegen der gleichmäßigen Dicke der Doppellagen dicht aufeinander liegen, wodurch ein Austrocknen der Haftschichten vermieden wird. Die Haftschichten können auch durch eine aufgelegte Abdeckfolie gegen das Austrocknen geschützt werden. Eine solche Folie hat zudem den Vorteil, daß die Haftschicht erst mit dem Abziehen der Abdeckfolie wirksam wird, was nach dem Aufbiegen der Dichtelemente erfolgen kann.

Bei den beschriebenen Beispielen, ist die Klebe-, bzw. Haftschicht 2 auf der gleichen Seite des Bandes aufgebracht, wie der Streifen 4,5. Im Bedarfsfall, können nicht nur die mit einer Haftschicht versehenen Seiten des Bandes 1,6 vertauscht werden. Die Haftschichten können auch beidseitig aufgebracht und mit Abdeckfolien versehen werden. Dies hat z.B. dann Vorteile, wenn mit dem Abdeckband eine großflächige Abdeckung, z.B. aus Abdeckpapier verbunden werden soll.

Im Rahmen der Erfindung kann das Abdeckband auch einteilig, z.B. aus Kunststoff hergestellt werden. Hier würde das mit einer Haftschicht versehene Bandteil, z. B. durch stärkeres Auswalzen auf die gewünschte Dünnwandigkeit und damit Flexibilität gebracht werden.

Da viele Lacke in Trockenkabinen bei höherer Temperatur ausgehärtet werden, muß das Abdeckband mit all seinen Komponenten, zumindest bis 100°C temperaturbeständig sein. Dies gilt auch für die Klebeverbindung zwischen Band 1,6 und die Streifen 4,5. Diese Klebeverbindung ist vorteilhaft durch einen adhäsiven Zusatz, unlösbar gemacht.

Im allgemeinen sind die Oberflächen von gewalzten Streifen 4,5 aus Kunststoff oder dgl., so glatt, daß sie problemlos zwischen die Dichtlippen und die lackierten Flächen der Karosserie eingeschoben werden können. In einzelnen Fällen kann es zweckmäßig sein, das Verstärkungselement 4,5 mit einer Gleitschicht zu versehen.

Für bestimmte Verarbeitungen kann es ferner zweckmäßig sein, das Wegbiegen durch den Streifen 4,5 zu erleichtern. Hierzu kann der Streifen mit parallel zur Längskante verlaufenden nutförmigen Prägungen versehen werden. In engen Krümmungen wird der Streifen zweckmäßig von der freien Kanten des Streifens 4,5 her, mit einer Schere in der notwendigen Tiefe mehrfach eingeschnitten, damit sich die Streifenteile zum Anpassen an die Krümmung, fächerförmig überlappen können.

## Patentansprüche

1. Abdeckband aus Papier oder Folie für Lackierarbeiten im Bereich von Dichtlippen an Kraftfahrzeugen, das zumindest einseitig mit einer klebstoffartigen Haftschicht (2) versehen ist, nachstehend Klebeband genannt, dadurch gekennzeichnet, daß das Klebeband (1,6) zumindest längs einer seiner Kanten (3) mit einem bandförmigen, klebstofffreien, flexiblen Versteifungselement (4,5) versehen ist, dessen Knicksteifigkeit vielfach größer ist, als die des Klebebandes (1,6) und das Aufbiegen der Dichtlippen ermöglicht.

2. Abdeckband nach Anspruch 1, dadurch gekennzeichnet, daß als Versteifungselement (4,5) ein bandförmiger Streifen (4,5) aus Kunststoff, wie Polyester, verwendet ist, der mit dem Klebeband (1,6) durch kleben oder schweissen unlösbar verbunden ist.

3. Abdeckband nach Anspruch 1 und 2, dadurch gekennzeichnet, daß der Steifen (5) mit dem Klebeband (6) derart überlappend verbunden ist, daß dieser zumindest mit wesentlicher Breite über die Bandkante (3) übersteht.

4. Abdeckband nach Anspruch 1 bis 3, dadurch gekennzeichnet, daß die Haftschicht (2) auf der gleichen Seite des Klebebandes (1,6), wie der Streifen (4,5) aufgebracht und mit einer Abdeckfolie versehen ist.

5. Abdeckband nach Anspruch 1 bis 4, dadurch gekennzeichnet, daß der Streifen (4,5) eine dem Klebeband (1,6) entsprechende Temperaturfestigkeit, zumindest im Bereich bis 100°C hat.

6. Abdeckband nach Anspruch 1 bis 5, dadurch gekennzeichnet, daß die dem Klebeband (1,6) abgelegene Seite des Streifens (4,5) oder zumindest der frei vom Klebeband (1,6) abstehende streifenförmige Teil mit einer glatten Oberfläche ausgestattet und gegebenenfalls mit einer Antihaftschicht und / oder Gleitschicht versehen ist.

7. Abdeckband nach Anspruch 1 bis 6, dadurch gekennzeichnet, daß die Materialstärke des Klebebandes (1,6) weniger als 200 µ, vorzugsweise etwa 120 µ und die des Streifens (4,5), weniger als 150 µ beträgt.

## Claims

1. Masking tape made of paper or film which is intended for paint work in the region of sealing lips on motor vehicles and is provided on at least one side with an adhesive bonding layer (2), said masking tape being referred to as adhesive tape hereinbelow, characterized in that the adhesive tape (1, 6) is provided, at least along one of its edges (3), with a band-like, adhesive-free, flexible stiffening element (4, 5), of which the buckling strength is far greater than that of the adhesive tape (1, 6) and which permits the sealing lips to be bent up.

2. Masking tape according to Claim 1, characterized in that, as stiffening element (4, 5), use is made of a band-like strip (4, 5) made of plastic, such as polyester, which is connected non-releasably to the adhesive tape (1, 6) by adhesive bonding or welding.

3. Masking tape according to Claims 1 and 2, characterized in that the strip (5) is connected to the adhesive tape (6) in an overlapping manner such that at least a considerable amount of the width of said strip projects over the tape edge (3).

4. Masking tape according to Claims 1 to 3, characterized in that the bonding layer (2) is applied on the same side of the adhesive tape (1, 6) as the strip (4, 5) and is provided with a covering film.

5. Masking tape according to Claims 1 to 4, characterized in that the strip (4, 5) has a temperature resistance corresponding to the adhesive tape (1, 6), at least in the range up to 100°C.

6. Masking tape according to Claims 1 to 5, characterized in that that side of the strip (4, 5) which is remote from the adhesive tape (1, 6), or at least that part of the strip which is free of the adhesive tape (1,6), is equipped with a smooth surface and, if appropriate, is provided with a non-stick layer and/or an anti-friction layer.

7. Masking tape according to Claims 1 to 6, characterized in that the thickness of the material of the adhesive tape (1, 6) is less than 200 µ, preferably approximately 120 µ, and the thickness of the material of the strip (4, 5) is less than 150 µ.

## Revendications

1. Bande de recouvrement en papier ou sous forme de feuille pour des travaux de laquage dans le domaine des lèvres d'étanchéité pour véhicules poids lourds, qui est pourvue au moins d'un côté d'une couche adhésive du type à colle (2), nommée ci-après bande adhésive, caractérisée en ce que la bande adhésive (1, 6) est pourvue au moins le long d'un de ses rebords (3) d'un élément de renforcement souple, exempt d'adhésif, sous forme de bande (4, 5), dont la résistance au pliage est bien supérieure à celle de la bande adhésive (1, 6), et qui rend possible le pliage des lèvres d'étanchéité.

2. Bande de recouvrement selon la revendication 1, caractérisée en ce que l'on utilise, en tant qu'élément de renforcement, un ruban sous forme de bande (4, 5) en matière synthétique, comme le polyester, lequel ruban est relié de manière non détachable à la bande adhésive (1, 6) par collage ou par soudage.

3. Bande de recouvrement selon la revendication 1 et 2, caractérisée en ce que l'organe de rigidification (5) est relié par superposition avec la bande adhésive (6), de sorte que celui-ci dépasse du rebord de bande (3) au moins d'une largeur substantielle.

4. Bande de recouvrement selon la revendication 1 à 3, caractérisée en ce que la couche adhésive (2) est appliquée du même côté de la bande adhésive (1, 6) que le ruban (4, 5) et est pourvue d'une feuille de recouvrement.

5. Bande de recouvrement selon la revendication 1 à 4, caractérisée en ce que le ruban (4, 5) a une résistance à la température correspondant à la bande adhésive (1, 6), au moins dans le domaine allant jusqu'à 100°C.

6. Bande de recouvrement selon la revendication 1 à 5, caractérisée en ce que le côté du ruban (4, 5) opposé à la bande adhésive (1, 6) ou au moins le ruban exempt de bande adhésive (1, 6), qui dépasse, ou la partie en forme de ruban est muni d'une surface lisse, et est pourvu, le cas échéant, d'une couche anti-adhésion et/ou dune couche lubrifiante.

7. Bande de recouvrement selon la revendication 1 à 6, caractérisée en ce que l'épaisseur de matériau de la bande adhésive (1, 6) est de moins de 200 µ, de préférence d'environ 120 µ et en ce que celle du ruban (4, 5) est de moins de 150 µ.
